# EUROPEAN PATENT APPLICATION

(11) **EP 4 293 844 A1**
(43) Date of publication of application: **20.12.2023**
(21) Application number: 22178851.6
(22) Date of filing: 14.06.2022
(51) Int. Cl.: H02G 3/22, H02G 15/013

(54) **GROMMET FOR SEALING A CABLE IN A CABLE BUSHING**

(71) Applicant: Robert Bosch GmbH, 70442 Stuttgart (DE)
(72) Inventor: Bottcher, Patrick, 4546 Kerken (DE); Anzaldi, Daniele, 5653KS Eindhoven (NL); Homem, Francisco, 5616JC Eindhoven (NL)

(57) **Abstract**

The invention relates to a grommet (1) for sealing a cable (2) in a cable bushing (4), a grommet assembly (1, 2, 4) for a camera, a camera including the grommet assembly (1, 2, 4), and a method for mounting the grommet (1) in the cable bushing (4). The grommet (1) for sealing a cable (2) in a cable bushing (4) comprises a grommet body (1A) having an inner sealing portion (1b) for sealing the cable (2) in the grommet body (1A) and an outer sealing portion (1c) for sealing the grommet body (1A) in the cable bushing (4), wherein the inner sealing portion (1b) and the outer sealing portion (1c) are connected at a first outer axial end (1A1) of the grommet body (1A), and a cavity (1f) is disposed between the inner sealing portion (1b) and the outer sealing portion (1c).

## Description

The present invention relates to a grommet for sealing a cable in a cable bushing, a grommet assembly for a camera, a camera including the grommet assembly, and a method for mounting the grommet in the cable bushing.

### Background of the invention

One main task in cabling is to seal the cable in the cable bushing against dust and water. Grommets for cables are used, for example, to seal surveillance cameras against water ingress. Most of the grommets available require that the cable is pushed through the grommet. While doing so a portion of material around the opening of the grommet is urged by the cable towards the inside of the camera. This pulls some of the material around the opening of the grommet from the cable into the inside of the camera. To ensure watertightness, the cable must be pulled back to shift the portion of material around the grommet opening back to the outside. If this is not done, the grommet may leak. Additionally, the sealing-function of a grommet may depend on the orientation of the cable behind the cable bushing. If the cable is bent excessively, for example, to lead it to a connection in the base of a surveillance camera, this may result in asymmetrical compression of the grommet, which in turn may lead to water ingress.

EP 3 361 586 A1 discloses a grommet for sealing a cable in a cable bushing, with a sleeve body, wherein the sleeve body has an inner sealing lip for sealing the cable in this sleeve body and an outer sealing lip for sealing the sleeve body in the cable bushing.

### Disclosure of the invention

According to the independent claims, a grommet for sealing a cable in a cable bushing, a grommet assembly for a camera, a camera including the grommet assembly, and a method for mounting the grommet in the cable bushing are provided. Further preferred developments are described by the dependent claims and the description below.

The proposed invention enables to provide required water protection regardless of excessive bending of the cable. Additionally, it allows to prevent errors during assembly, as the assembly is easier, more intuitive and less prone to human mistakes.

The grommet for sealing a cable in a cable bushing comprises a grommet body having an inner sealing portion for sealing the cable in the grommet body and an outer sealing portion for sealing the grommet body in the cable bushing. In other words, the grommet seals a cable passing through the grommet body with its inner sealing portion and seals the grommet body against the cable bushing with its outer sealing portion. Preferably, the cable bushing is a cylindrical hole disposed in a housing and the grommet is configured to be assembled in the cylindrical hole.

The inner sealing portion and the outer sealing portion are connected only at a first outer axial end of the grommet body, and a cavity is disposed between the inner sealing portion and the outer sealing portion. Preferably, the inner sealing portion and the outer sealing portion are formed as two concentric tubes which are only connected at the first outer axial end of the grommet body. This allows the outer sealing in the cable bushing to be decoupled from the inner sealing of the cable, so that the sealing function of the grommet is ensured even if the cable is bent severely. Furthermore, the design of the grommet body with a connection between the inner and outer sealing portions only at the first outer axial end of the grommet body allows a cable to be inserted only at this end, thus preventing the sealing effect of the grommet from being affected by incorrect installation of the cable.

According to an embodiment, a chamfer is arranged at the first outer axial end of the grommet body. In other words, the chamfer is located on a part of the grommet body where the inner and outer sealing portions are joined together. This connection increases the stiffness of the grommet body at its first outer axial end and allows a chamfer to be applied due to the larger surface area created by the connection. The increased stiffness and the chamfer facilitate the insertion of a cable into the grommet at the first outer axial end of the grommet body.

Furthermore, a flange is arranged at a second outer axial end of the grommet body opposite the first outer axial end. Preferably, the flange abuts against a corresponding end surface of a cable bushing when the grommet is mounted and, thus, provides a defined position of the grommet in the cable bushing.

According to an embodiment, the inner sealing portion has a smooth surface on a side facing away from the outer sealing portion. The term "smooth surface" shall be understood as a surface that has no elevations or indentations. This creates a large sealing surface between the inner sealing portion and a cable inserted into it, making the grommet even more robust against water ingress.

Additionally, at least one rib is arranged on a surface of the outer sealing portion facing away from the inner sealing portion. In other words, the at least one rib is disposed on an outer surface of the outer sealing portion. Preferably, a plurality of ribs, most preferably three ribs, may be arranged on the surface of the outer sealing portion facing away from the inner sealing portion (outer surface). Preferably, the ribs may be arranged on the outer surface having equivalent distance to each other. An outer diameter of the ribs may be larger than an inner diameter of a cable bushing receiving the grommet body.

According to an embodiment, a thickness of the inner sealing portion is smaller than a thickness of the outer sealing portion, and an axial length of the inner sealing portion is smaller than an axial length of the outer sealing portion.

For example, the thickness and the length of the inner sealing portion may be a compromise between the force required to insert a cable into the grommet body, decoupling the inner sealing portion from the outer sealing section and ensuring the required contact pressure between the inner sealing portion and an inserted cable to ensure the watertightness of the grommet. The longer and the thinner the inner sealing portion, the more difficult it is to insert a cable into it. The thicker the inner sealing portion, the higher the contact pressure on an inserted cable, but the stronger the coupling to the outer sealing portion. Thus, to achieve the desired decoupling between both sealing portions, it is preferable to provide an inner sealing portion that is thinner and shorter than the outer sealing portion.

On the other hand, the design of the grommet body with an outer sealing portion that is thicker and longer than its inner sealing portion makes it easier to install the grommet body in a cable bushing. In other words, the grommet body is designed with a bulky and rigid outer structure to be easily grabbed and effortlessly slid a cable bushing.

According to an embodiment, at least one rib is arranged in the cavity between the inner sealing portion and the outer sealing portion. Preferably, a plurality of ribs, most preferably three ribs, may be arranged in the the cavity between the inner sealing portion and the outer sealing portion. The ribs may preferably be arranged symmetrically around a middle axis of the grommet body and may extend in axial direction from the first outer end of the grommet body along a length of the inner sealing portion. It may also be possible that the axial length of the ribs is shorter than the axial length of the inner sealing portion.

The ribs arranged in the cavity between the inner and outer sealing portion are designed to prevent the inner sealing portion from being pulled to the opposite side if a user needs to pull the cable out again after inserting it into the grommet body. Furthermore, they increase the required contact pressure of the inner sealing portion on a cable and reduce the creep-related stress relaxation over time. The thickness of the ribs is a trade-off between manufacturability (minimum thickness required) and the desired decoupling of the inner sealing portion with respect to the rest of the grommet body.

According to an embodiment, a material of the grommet is a rubber having self-lubricating properties. Preferably, the rubber comprises ethylene propylene diene monomer and paraffine wax. This allows for reducing the force to insert a cable into the inner sealing portion of the grommet body. Using a material that already has paraffin wax embedded therein also eliminates the need to apply an additional lubricant during assembly, reducing the likelihood of errors, and additional costs.

Furthermore, a grommet assembly is provided, which comprises a cable bushing for accommodating a grommet and the grommet as described above. According to the invention, a diameter of the least one rib arranged on the surface of the outer sealing portion of the grommet body facing away from the inner sealing portion is larger than an inner diameter of the cable bushing. Preferably a plurality of ribs, most preferably three ribs, are disposed on the surface of the outer sealing portion of the grommet body facing away from the inner sealing portion. Preferably, at least one of the three ribs is arranged inside the cable bushing for sealing the grommet body against the cable bushing.

According to an embodiment of the grommet assembly, the at least one rib arranged on the surface of the outer sealing portion of the grommet body facing away from the inner sealing portion abuts a first axial end of the cable bushing and the flange of the grommet abuts a second axial end of the cable bushing opposite the first axial end thereof. Preferably one of three ribs disposed on the surface of the outer sealing portion of the grommet body facing away from the inner sealing portion abuts the first axial end of the cable bushing. This leads to a defined axial position of the grommet body within the cable bushing, which is determined on one side by the flange and on the other side by the at least one rib. The at least one rib further provides a "click-in" feature that gives the user feedback that the grommet is correctly assembled.

According to an embodiment of the grommet assembly an inner diameter of the inner sealing portion of the grommet body is smaller than an outer diameter of the cable. This ensures the required contact pressure between the inner sealing portion and the cable and prevents an incorrect installation of the cable from the second outer axial end of the grommet body.

Additionally, a camera is provided, which comprises a base including the grommet assembly as described above, and a camera body attached to the base. The camera body may house a camera head with a viewing lens and a sensor, and may, e.g., be connected to the base via a swivel mechanism. For example, the camera may be supplied with electrical power via an ethernet cable compliant with the Power-over Ethernet (PoE) standard. It is also possible to power the camera via a cable from another power source, e.g. a 24 VAC or 12 VDC power source. In order to route the respective cable from an external power source to the corresponding connector in the base, the above-described grommet assembly may be used to prevent dust and water from entering the base.

Further, a method for mounting the grommet described above to a cable bushing is provided. According to the invention, a cable is pushed through the inner sealing portion of the grommet body in a first step. In this process, the cable is inserted into the grommet body from a direction of the first outer axial end thereof. The chamfer at this axial end of the grommet body helps the cable entering into the inner sealing portion. By design, it is not possible/very difficult to insert the cable from an opposite axial end of the inner sealing portion, because there is no design feature helping the cable getting through it. Furthermore, the stiffness at this end is reduced and the inner diameter of the inner sealing portion is smaller than the outer diameter of the cable, making it even more difficult to insert the cable from the wrong side.

In a second step, the grommet body with the cable is inserted into the cable bushing. During this step, the grommet body is pushed into the cable bushing until the at least one rib arranged on the surface of the outer sealing portion of the grommet body facing away from the inner sealing portion abuts a first axial end of the cable bushing and the flange of the grommet abuts a second axial end of the cable bushing opposite the first axial end thereof. Preferably, when the at least one rib has reached its position a "click-in" feature gives the user feedback that the grommet is correctly assembled.

The present invention can, e.g., be used for sealing an entry point of a power supply cable (e.g., an ethernet cable compliant with the Power-over Ethernet (PoE) standard) into a base of a surveillance camera. The sealing can offer protection against water ingress according to protection class up to IP67, and at the same time is easy to install.

Further advantages and embodiments of the invention are shown in the following description and the accompanying figures. The invention is illustrated schematically by means of examples in the figures and is described below with reference to the figures. The same elements are provided with the same reference signs so that a repeated description is dispensed if not needed.

### Brief description of the figures

Figure 1 shows an example of a surveillance camera according to the present invention in a perspective side view;
Figure 2 shows the base of the surveillance camera shown in Figure 1 in an open state with the elements inside the base visible;
Figure 3a shows an example of a grommet according to a preferred embodiment of the present invention mounted in the base shown in Figure 2, and Figure 3b shows a longitudinal section of the grommet depicted in Figure 3a;
Figure 4a and 4b show an example of a grommet according to a preferred embodiment of the present invention in a plain view and a sectional view;
Figure 5a, 5b illustrate an example of a method for inserting a cable into the grommet shown in the Figures 2 to 4b according to the present invention; and
Figure 6 illustrates an example of a method for inserting the grommet with the cable shown in Figure 5a into a cable bushing according to the present invention.

### Embodiment of the invention

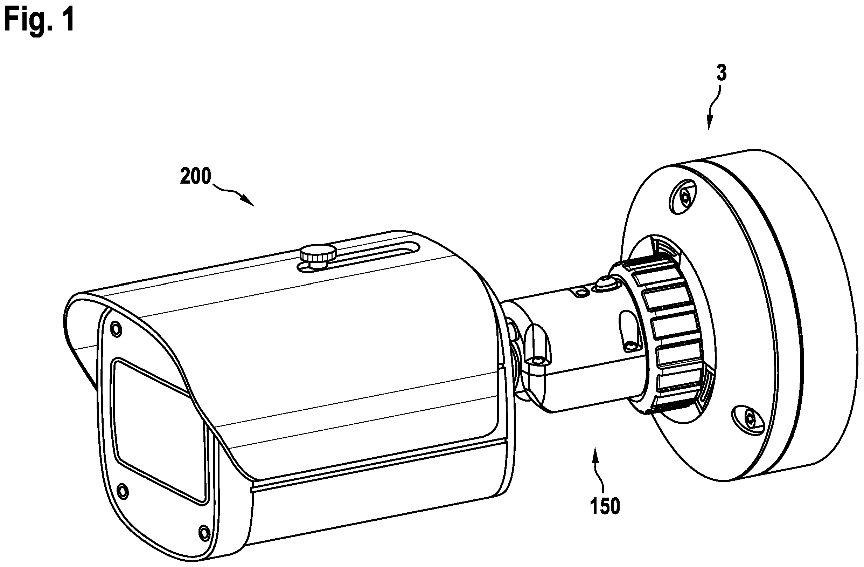

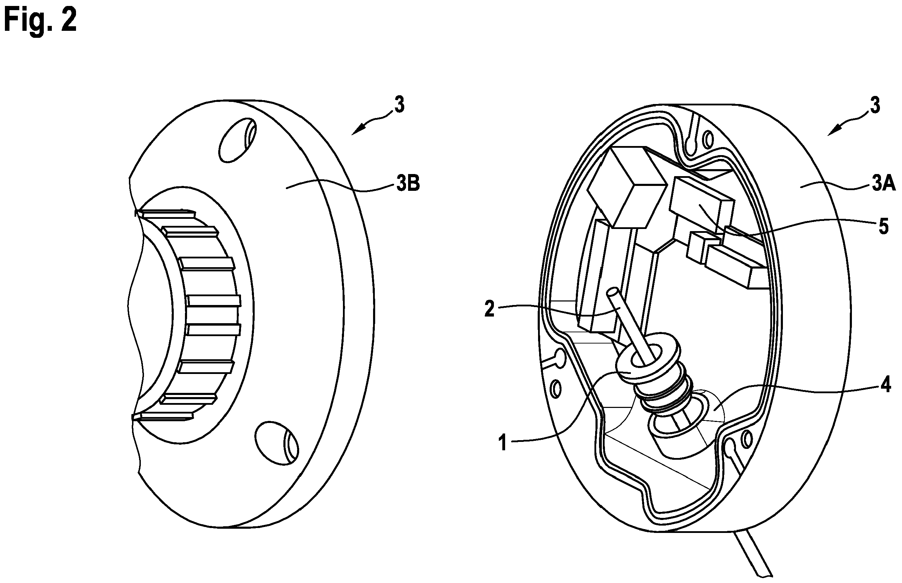

Figure 1 shows an embodiment of the surveillance camera according to a preferred embodiment of the invention. The camera comprises a base 3 with which it may be fixed to a support structure such as a wall or a ceiling, and in which the electrical/signal connections can be made. A camera body 200, which may house a camera head with a viewing lens and a sensor, is connected to the base 3 via a swivel mechanism 150. For example, the camera may be supplied with electrical power via an ethernet cable compliant with the Power-over Ethernet (PoE) standard. It is also possible to power the camera via a cable from another power source, e.g., a 24 VAC or 12 VDC power source. In order to route the respective cable from an external power source to the corresponding connector in the base 3, a grommet assembly 3, 4, as exemplified in Figure 2, may be used to prevent dust and water from entering the base 3.

Figure 2 shows the base 3 of the surveillance camera shown in Figure 1 in an open state with elements inside the base 3 visible. The base 3 comprises a base cover 3B and a base housing 3A, in/at which a grommet assembly 1, 2, 4 according to a preferred embodiment of the invention is arranged. The grommet assembly 1, 2, 4 includes a cable bushing 4, which is designed as a cylindrical hole in the base housing 3A, a grommet 1 and a cable 2, wherein the latter may, e.g., be a power supply cable 2. The base housing 3A further accommodates electrical connections 5 to which the power supply cable 2 and other cables, e.g., signal cables, can be connected to the camera.

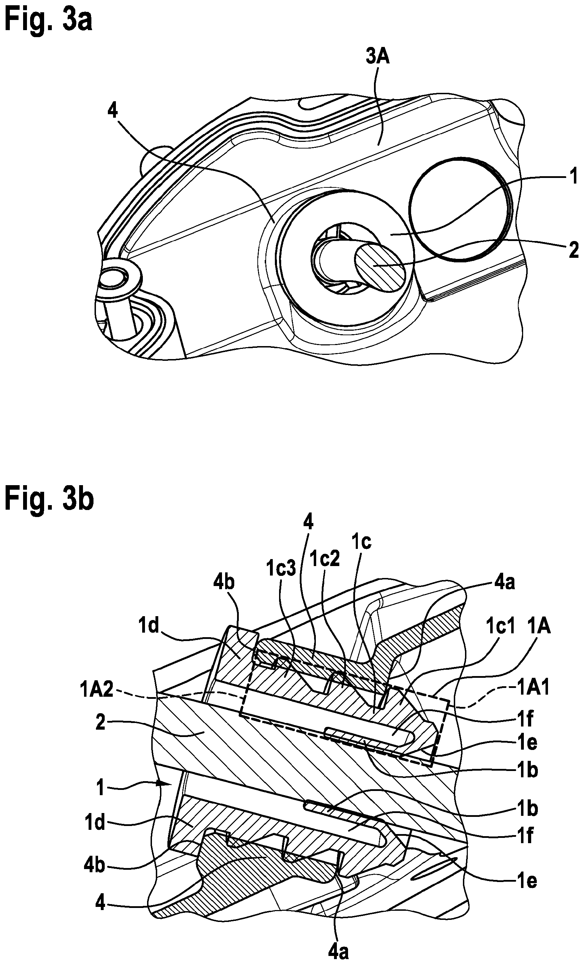

Figure 3a shows an example of a grommet 1 according to a preferred embodiment of the present invention, the grommet 1 mounted in the base housing 3A shown in Figure 2. The depicted grommet 1 receives a cable 2 and is disposed in the cable bushing 4 such that a flange 1d of the grommet abuts an upper end surface (second axial end) 4b of the cable bushing 4 (see also Figure 3b).

Figure 3b shows a longitudinal section of the grommet 1 depicted in Figure 3a. The grommet 1, which receives a cable 2, comprises a grommet body 1A including an inner sealing portion 1b and an outer sealing portion 1c which are connected only at a first outer axial end 1A1 of the grommet body 1A and separated from each other by a cavity 1f. At the first outer axial end 1A1 of the grommet body 1A a chamfer 1e is disposed for facilitating the insertion of the cable 2 into the grommet 1.

The inner sealing portion 1b seals the grommet 1 against the cable 2. The outer sealing portion 1c has three ribs 1c1 to 1c3. The ribs 1c3 and 1c2 seal the grommet body 1A against the cable bushing 4. The rib 1c1, on the other hand, is disposed outside the cable bushing 4 and abuts a lower end surface (first axial end) 4a of the cable bushing 4 in axial direction of the grommet 1. Furthermore, the grommet 1 has a flange 1d disposed at a second axial outer end 1A2 of the grommet body 1A and abutting an upper end surface (second axial end) 4b of the cable bushing 4.

It can be seen in Fig. 3b that the length of the inner sealing portion 1a is shorter than the length of the outer sealing portion 1c of the grommet body 1A, and that the thickness of the inner sealing portion 1b is smaller than the thickness of the outer sealing portion 1c. In combination with the cavity 1f arranged between the inner and outer sealing portion 1b, 1c, this provides a flexible behaviour of the inner sealing portion 1b when bending the cable 2 for connecting it to the electrical connection 5 inside the base housing 1A. In other words, the inner sealing portion 1b reduces the transmission of load from the bending cable 2 to the rest of the grommet body 1A (decoupling function to limit the formation of openings resulting in water ingress) and still guarantees a required contact pressure to the cable 2 for water tightness, without exceeding the material yielding limits. The length of the inner sealing portion 1b may be a trade-off between providing a large contact surface for ensuring water tightness and limiting the friction for the insertion of the cable 2.

Furthermore, it becomes clear from Figure 3b that the position of the flange 1d of the grommet with regard to the rib 1c1 provide a defined arrangement of the grommet 1 in the cable bushing 4 when the grommet 1 is mounted in the base housing 1A.

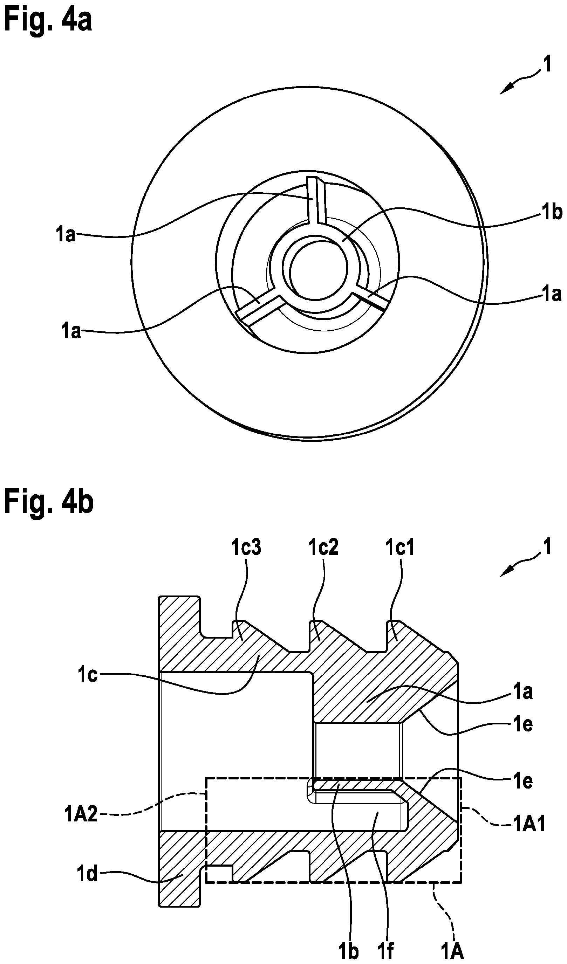

Figure 4a and 4b show an example of a grommet 1 according to a preferred embodiment of the present invention in a plain view and a sectional view. In addition to the elements described above, the grommet 1 has three internal ribs 1a positioned symmetrically in the cavity 1f for supporting the inner sealing portion 1b. The depicted rib 1a extends in axial direction from the first outer axial end 1A1 of the grommet body 1A along a length of the inner sealing portion 1b. In other words, in the example depicted in Figure 4b, an end surface 1a1 of the rib 1a opposite the first outer axial end 1A1 of the grommet body 1A is flush to an end surface 1b1 of the inner sealing portion being 1b, the end surface 1b1 being arranged inside the grommet body 1A. However, it may also be possible that the axial length of the ribs 1a is shorter than the axial length of the inner sealing portion 1b.

The purpose of the ribs 1a is to prevent the inner sealing portion 1b from being pulled to the opposite side if the user needs to pull the cable 2 out again after inserting it into the grommet body 1A. Furthermore, they increase the required contact pressure of the inner sealing portion 1b on a cable 2 and reduce the creep-related stress relaxation over time. The thickness of the ribs 1a is a trade-off between manufacturability (minimum thickness required) and the desired decoupling of the inner sealing portion 1b with respect to the rest of the grommet body 1A.

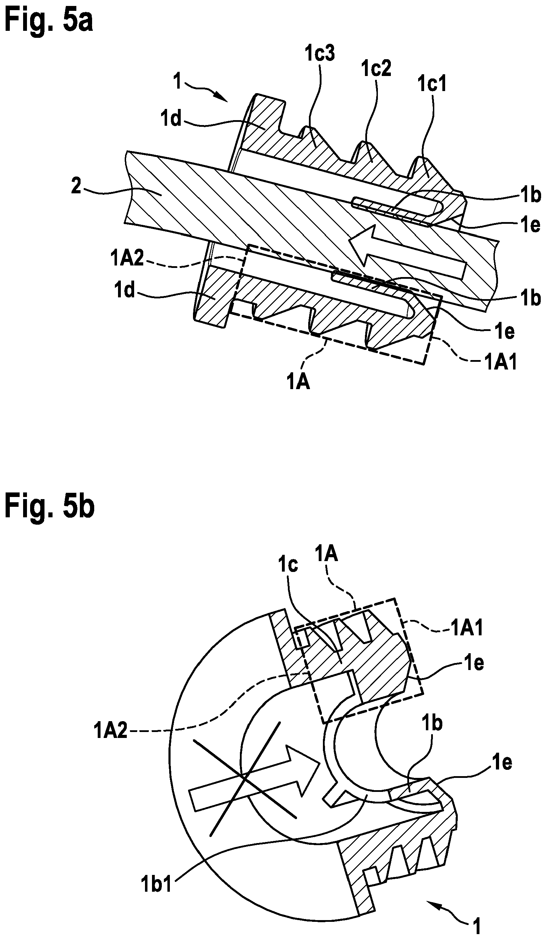

Figure 5a, 5b illustrate an example of a method for inserting a cable 2 into the grommet 1 shown in the Figures 2 to 4b according to the present invention.

In particular, Figure 5a shows a first step of pushing a cable 2 through the inner sealing portion 1b of the grommet body 1A.

It can be derived from Figure 5a as to how the cable 2 should be inserted into the grommet 1, namely from the first outer axial end 1A1 of the grommet body 1A, whereas Fig 5b shows that it is difficult/impossible to insert the cable 2 from the opposite second outer axial end 1A2.

The bold arrow in Figure 5a indicates the direction from which the cable 2 can be inserted into the grommet 1, namely, as mentioned above, from the first outer axial end 1A1 of the grommet body 1A, where the chamfer 1e is located. This is partly because at the first outer axial end 1A1 of the grommet body 1A the inner and outer sealing portions 1b, 1c1 are joined together, giving the latter greater rigidity than the opposite end of the inner sealing portion 1b, which has only a small wall thickness. In addition, the chamfer 1e on this side of the grommet housing 1A facilitates insertion of the cable 2, while the inner sealing portion 1b has a sharp-edged ring shape on the opposite side (end surface 1b1) that makes insertion of the cable 2 almost impossible. This is illustrated by the crossed-out bold arrow in Figure 5b.

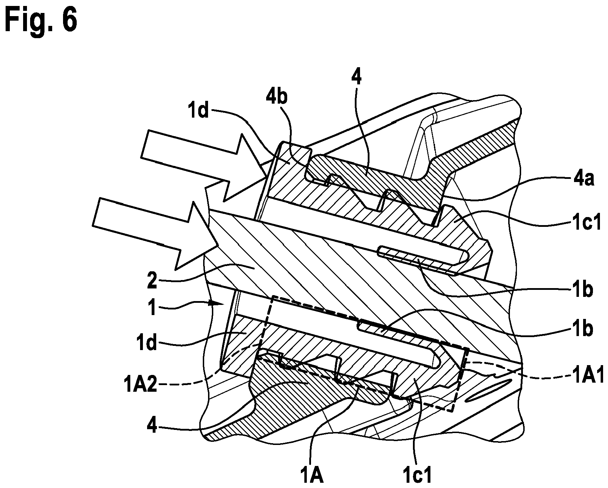

Figure 6 illustrates an example of a method for inserting the grommet 1 with the cable 2 shown in Figure 5a into a cable bushing 4 according to the present invention. In particular, Figure 6 shows a second step of inserting the grommet body 1A with the cable 2 into the cable bushing 4.

The two bold arrows depicted in Figure 6 illustrate that the grommet body 1A and the cable 2 shall be pushed together into the cable bushing 4. In this process, the grommet body 1A with the cable 2 is pushed into the cable bushing 4 until the rib 1c1 arranged on the outer surface of the outer sealing portion 1c of the grommet body abuts a lower end surface (first axial end) 4a of the cable bushing 4 and the flange 1d of the grommet 1 abuts the upper end surface (second axial end) 4b of the cable bushing 4. Preferably, when the rib 1c1 has reached its position a "click-in" feature gives the user feedback that the grommet 1 is correctly assembled.

In other words, the second step comprises pushing the grommet 1 inside an inner diameter of the cable bushing 4, which happens when the cable 2 is already inserted in the grommet 1 facilitating the handling of the grommet 1 during the second step. Preferably, the rib 1c1 of the grommet 1 having a bigger outer diameter than the inner diameter of the cable bushing 4 "pops out" of the cable bushing 4 when the grommet 1 is fully inserted giving feedback ("click") to the user that the grommet 1 is correctly assembled.

Summarizing, the present invention provides protection against the ingress of water in accordance with protection classes up to the IP67, while being easy to install. In addition, the invention makes it possible to avoid errors during installation, as the installation is simpler, more intuitive and less prone to human error.

## Claims

1. A grommet (1) for sealing a cable (2) in a cable bushing (4) comprising
a grommet body (1A) having an inner sealing portion (1b) for sealing the cable (2) in the grommet body (1A) and an outer sealing portion (1c) for sealing the grommet body (1A) in the cable bushing (4), wherein
the inner sealing portion (1b) and the outer sealing portion (1c) are connected only at a first outer axial end (1A1) of the grommet body (1A), and a cavity (1f) is disposed between the inner sealing portion (1b) and the outer sealing portion (1c).

2. The grommet (1) according to claim1, wherein
a chamfer (1e) is arranged at the first outer axial end (1A1) of the grommet body (1A), and
a flange (1d) is arranged at a second outer axial end (1A2) of the grommet body (1A) opposite the first outer axial end (1A1).

3. The grommet (1) according to one of the preceding claims, wherein
the inner sealing portion (1b) has a smooth surface on a side facing away from the outer sealing portion (1c), and
at least one rib (1c1-1c3) is arranged on a surface of the outer sealing portion (1c) facing away from the inner sealing portion (1b).

4. The grommet (1) according to one of the preceding claims, wherein
a thickness of the inner sealing portion (1b) is smaller than a thickness of the outer sealing portion (1c), and
an axial length of the inner sealing portion (1b) is smaller than an axial length of the outer sealing portion (1c).

5. The grommet (1) according to one of the preceding claims, wherein
at least one rib (1a) is arranged in the cavity (1f) between the inner sealing portion (1b) and the outer sealing portion (1c).

6. The grommet (1) according to one of the preceding claims, wherein
a material of the grommet (1) is a rubber having self-lubricating properties.

7. The grommet (1) according to claim 6, wherein
the rubber comprises ethylene propylene diene monomer and paraffin wax.

8. A grommet assembly (1, 2, 4) comprising a cable (2), a cable bushing (4) for accommodating a grommet (1) and the grommet (1) according to one of the preceding claims 3 to 7, wherein a diameter of the least one rib (1c1-1c3) arranged on the surface of the outer sealing portion (1c) of the grommet body (1A) facing away from the inner sealing portion (1b) is larger than an inner diameter of the cable bushing (4).

9. The grommet assembly (1, 2, 4) according to claim 8, wherein
the at least one rib (1c1) arranged on the surface of the outer sealing portion (1c) of the grommet body (1A) facing away from the inner sealing portion (1b) abuts a first axial end (4a) of the cable bushing (4) and the flange (1d) of the grommet (1) abuts a second axial end (4b) of the cable bushing (4) opposite the first axial end (4a) thereof.

10. The grommet assembly (1, 2, 4) according to claim 8 or 9, wherein
an inner diameter of the inner sealing portion (1b) of the grommet body (1A) is smaller than an outer diameter of the cable (2).

11. A camera comprising
a base (3) including the grommet assembly (1, 2, 4) according to one of claims 8 or 9, and
a camera body (200) attached to the base (3).

12. A method for mounting the grommet (1) according to one of the claims 1 to 7 to a cable bushing (4), the method comprising
a first step of pushing a cable (2) through the inner sealing portion (1b) of the grommet body (1A), wherein
the cable (2) is inserted into the grommet body (1A) from a direction of the first outer axial end (1A1) thereof, and
a second step of inserting the grommet body (1A) with the cable (2) into the cable bushing (4), wherein
the grommet body (1A) with the cable (2) is pushed into the cable bushing (4) until the at least one rib (1c1) arranged on the surface of the outer sealing portion (1c) of the grommet body (1A) facing away from the inner sealing portion (1b) abuts a first axial end (4a) of the cable bushing (4) and the flange (1d) of the grommet (1) abuts a second axial end (4b) of the cable bushing (4) opposite the first axial end (4a) thereof.
